# EUROPEAN PATENT APPLICATION

(11) **EP 1 357 152 A1**
(43) Date of publication of application: **29.10.2003**
(21) Application number: 02077189.5
(22) Date of filing: 26.04.2002
(51) Int. Cl.: C08L 23/04, C08F 10/02, B60K 15/03

(54) **Polymer for fuel tanks**

(71) Applicant: Solvay Polyolefins Europe-Belgium (Société Anonyme), 1050 Bruxelles (BE)
(72) Inventor: Siberdt, Fabian, 1090 Brussels (BE); Neuray, Francois, 4630 Soumagne (BE); Lequeux, Michel, 1020 Brussels (BE)
(74) Representative: Smith, Julian Philip Howard

(57) **Abstract**

A fuel tank for a vehicle is disclosed, comprising at least one component which is blow-moulded multimodal polyethylene having a polydispersity M_{w}/Mₙ of at least 4, formed of at least two blocks, each having a polydispersity M_{w}/Mₙ of less than 4.

## Description

The present invention relates to an automobile fuel tank comprising polyethylene and to the manufacture of such a tank.

Automobile fuel tanks comprising high density polyethylene are known. Such fuel tanks are required to exhibit high safety performance, particularly with regard to fire resistance and impact resistance. They are required to meet minimum statutory industry specified performance criteria both with respect to creep resistance when the tank is subjected to a fire, and crash test resistance when the tank is subjected to an impact. An automobile fuel tank for use in Europe is required to have a fire resistance and an impact resistance both complying with the respective standards defined in ECE34, Annex 5. In order to meet these standards, known blow moulded automobile fuel tanks are required to have a minimum wall thickness of at least 3mm so as to provide sufficient impact strength and creep resistance for the fuel tank as a whole. An automobile fuel tank composed of polyethylene typically has a volume of up to about 100 litres, or even greater. Given the requirement for such volumes in combination with the need for progressively lower wall thicknesses, this places a high demand on the physical properties of the walls of the tank, both following manufacture and when used. Thus the walls of the fuel tank are required not to warp or shrink following the manufacture thereof, and are required to have a precisely defined shape and rigidity during use. Accordingly a fuel tank is required to have a good environmental stress crack resistance, good creep resistance and also good impact resistance.

JP 06172594 discloses a polyethylene composition suitable for blow-moulding into a gasoline tank, which comprises a blend of a high molecular weight polymer and a low molecular weight polymer made using a Ziegler catalyst. Ziegler catalysts have a variable comonomer content with molecular weight, and a usually have a broad molecular weight distribution, generally significantly greater than 4.

WO 97/02294 discloses a bimodal HDPE resin in which the high molecular weight component is produced using a metallocene catalyst, and the low molecular weight component produced using a non-metallocene catalyst. The resultant resin is said to be suitable for blow-moulding into containers; a fuel tank is given as one example of a container. However no indication is given as to whether the physical property requirements for automobile fuel tanks discussed above would be satisfied by this resin. The non-metallocene component can be expected to have a variable comonomer content with molecular weight, and also a broad molecular weight distribution.

We have found that it is possible to obtain blow-moulded vehicle fuel tanks having improved properties with a polyethylene prepared using a multimodal metallocene catalyst.

Accordingly in a first aspect, the present invention provides a fuel tank for a vehicle comprising at least one component which is blow-moulded multimodal polyethylene having a polydispersity M_{w}/Mₙ of at least 4, formed of at least two blocks, each having a polydispersity M_{w}/Mₙ of less than 4. Preferably the blow-moulded component forms one or more of the walls of the tank. By "multimodal" polyethylene is meant polyethylene having at least two components of different molecular weights and compositions (ie comonomer content). It is believed that the improved properties are due to the fact that metallocene catalysts have a generally constant comonomer content as molecular weight varies.

The polydispersity of the injection-moulded multimodal polyethylene is preferably no greater than 35, more preferably no greater than 20. The most preferred range is 4-20.

In a second aspect, the invention provides a fuel tank for a vehicle comprising at least one component which is blow-moulded multimodal polyethylene, wherein the polyethylene has a creep deformation at 80°C of no more than 2.4%, and a Charpy impact at - 40°C of at least 15 kJ/m². Preferably the polyethylene has a creep resistance at 80°C of no more than 2.3%; preferably it has a Charpy impact at - 40°C of at least 20 kJ/m².

In this specification, Charpy impact is defined as the impact as assessed by notched Charpy tests performed at - 40°C on specimens taken from 4mm compressed plates according to ISO179/1EA. Creep resistance is defined as that assessed by tensile strength measurements performed at 80°C under 2.5 Mpa on ISOB1A specimens machined from 2 mm thick compressed plates.

The polyethylene is preferably bimodal: by "bimodal" is meant two components of different molecular weights, one having a higher relative molecular weight than the other of the two components and compositions (ie comonomer content).

The unformulated polyethylene resin, before the incorporation of any additives, preferably has a density of from 930 to 965 kg/m³. If following injection moulding the density is lower than 930 kg/m³, then the creep resistance of the component may be insufficient for use in an automobile fuel tank. If the density is higher than 965 kg/m³, then the walls of the tank may be too brittle, resulting in insufficient impact resistance and toughness. In this specification, the density of the polyethylene is measured according to ISO 1183. Resins used in fuel tanks typically contain about 0.5wt% of carbon black, which increases the density compared with unformulated resin by less than 1 kg/m³.

The high load melt index (HLMI) of the resin is preferably between 1 and 10, more preferably between 2 and 7 g/10 min. HLMI is measured using the procedures of ASTM D 1238 at 190°C using a load of 21.6kg.

For blow-moulding, an important parameter of the resin is its viscosity at low shear rate. Accordingly it is preferred that the value of µ₀, the viscosity at a shear rate of 1 s⁻¹, with a conical die having a ratio of length to internal diameter of 0.3:1, is at least 2.5 x 10⁶ dPa.s, preferably at least 3 x 10⁶ dPa.s.

The bimodal polyethylene preferably comprises 20-80% of a high molecular weight block, and 70-30% of a low molecular weight block. Most preferred is 35-65 % of the high molecular weight block, and 65-35 % of the low molecular weight block. The low molecular weight block is preferably a homopolymer of ethylene, but may also be a copolymer. The high molecular weight block is preferably a copolymer of ethylene and one or more of butene, pentene, hexene and octene. The Melt Index (MI₂) of the low molecular weight block is preferably less than 500, more preferably less than 100 g/10 min. MI₂ is measured using the procedures of ASTM D 1238 at 190°C using a load of 21.6kg. The HLMI of high molecular weight block is preferably between 0.001 and 2, more preferably between 0.01 and 0.7; its density is preferably less than 950, more preferably less than 940 kg/m³.

The polyethylene resin utilised in the present invention may be made using a Ziegler-Natta catalyst. In such a case, the Ziegler-Natta catalyst should be one capable of producing individual blocks having polydispersities of less than 4. The polydispersity of overall resin in such a case is preferably between 10 and 18. Ziegler-Natta catalysts typically consist of two main components. One component is an alkyl or hydride of a Group I to III metal, most commonly Al(Et)₃ or Al(iBu)₃ or Al(Et)₂Cl but also encompassing Grignard reagents, n-butyllithium, or dialkylzinc compounds. The second component is a salt of a Group IV to VIII transition metal, most commonly halides of titanium or vanadium such as TiCl₄, TiCl₃, VCl₄, or VOCl₃. The catalyst components when mixed, usually in a hydrocarbon solvent, may form a homogeneous or heterogeneous product. Such catalysts may be impregnated on a support, if desired, by means known to those skilled in the art and so used in any any of the major processes known for co-ordination catalysis of polyolefins such as solution, slurry, and gas-phase. In addition to the two major components described above, minor amounts of other compounds (typically electron donors) may be added to further modify the polymerisation behaviour or activity of the catalyst.

It is preferred that the polyethylene resin is made using a metallocene catalyst, in which case the polydispersity of the resin is preferably between 5 and 9.

Metallocenes may typically be represented by the general formula:

(C₅Rₙ)_{y} Zₓ (C₅Rₘ) M L_{(4-y-1)}

Where
(C₅Rₙ)_{y} and (C₅Rₘ) are cyclopentadienyl ligands,
R is hydrogen, alkyl, aryl, alkenyl, etc.
M is a Group IVA metal
Z is a bridging group,
L is an anionic ligand, and
y is 0, 1 or 2, n and m are from 1 to 5, x is 0 or 1.

The most preferred complexes are those wherein y is 1 and L is halide or alkyl. Typical examples of such complexes are bis (cyclopentadienyl) zirconium dichloride and bis(cyclopentadienyl zirconium dimethyl. In such metallocene complexes the cyclopentadienyl ligands may suitably be substituted by alkyl groups such as methyl, n-butyl or vinyl. Alternatively the R groups may be joined together to form a ring substituent, for example indenyl or fluorenyl. The cyclopentadienyl ligands may be the same or different. Typical examples of such complexes are bis(n-butylcyclopentadienyl) zirconium dichloride or bis (methylcyclopentadienyl) zirconium dichloride.

Examples of such complexes may be found in EP 129368 and EP 206794 the disclosures of which are incorporated herein by reference.

Another type of metallocene complex is constrained geometry complexes in which the metal is in the highest oxidation state. Such complexes are disclosed in EP 416815 and WO 91/04257 both of which are incorporated herein by reference. The complexes have the general formula: 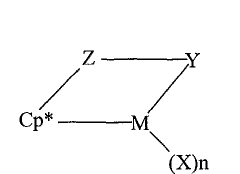 wherein:
Cp* is a single η5-cyclopentadienyl or η5-substituted cyclopentadienyl group optionally covalently bonded to M through -Z-Y- and corresponding to the formula: 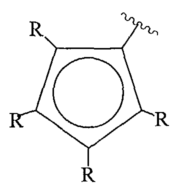 wherein each R is independently hydrogen or a moiety selected from halogen, alkyl, aryl, haloalkyl, alkoxy, aryloxy, silyl groups, and combinations thereof of up to 20 non-hydrogen atoms, or two or more R groups together form a fused ring system;
M is zirconium, titanium or hafnium bound in an η5 bonding mode to the cyclopentadienyl or substituted cyclopentadienyl group and is in a valency state of +3 or +4;
each X is independently hydride or a moiety selected from halo, alkyl, aryl, silyl, germyl, aryloxy, alkoxy, amide, siloxy, and combinations thereof (e.g. haloalkyl, haloaryl, halosilyl, alkaryl, aralkyl, silylalkyl, aryloxyaryl, and alkyoxyalkyl, amidoalkyl, amidoaryl) having up to 20 non-hydrogen atoms, and neutral Lewis base ligands having up to 20 non-hydrogen atoms;
n is 1 or 2 depending on the valence of M;
Z is a divalent moiety comprising oxygen, boron, or a member of Group 14 of the Periodic Table of the Elements; and
Y is a linking group covalently bonded to the metal comprising nitrogen, phosphorus, oxygen or sulfur, or optionally Z and Y together form a fused ring system.

Most preferred complexes are those wherein Y is a nitrogen or phosphorus containing group corresponding to the formula (-NR¹) or (-P R¹) wherein R¹ is C₁-C₁₀ alkyl or C₆-C₁₀ aryl and wherein Z is SiR"₂, CR"₂, SiR"₂ SiR"₂, CR"=CR" or GeR"₂ in which R" is hydrogen or hydrocarbyl.

Most preferred complexes are those wherein M is titanium or zirconium.

Further examples of metallocene complexes are those wherein the anionic ligand represented in the above formulae is replaced with a diene moiety. In such complexes the transition metal may be in the +2 or +4 oxidation state and a typical example of this type of complex is ethylene bis indenyl zirconium (II) 1,4-diphenyl butadiene. Examples of such complexes may be found in EP 775148A and WO 95/00526 the disclosures of which are incorporated herein by reference.

For example the complexes may have the general formula: 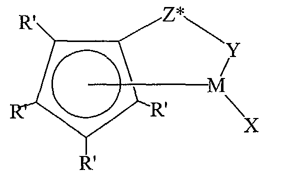 wherein:
R' each occurrence is independently selected from hydrogen, hydrocarbyl, silyl, germyl, halo, cyano, and combinations thereof, said R' having up to 20 non hydrogen atoms, and optionally, two R' groups (where R' is not hydrogen, halo or cyano) together form a divalent derivative thereof connected to adjacent positions of the cyclopentadienyl ring to form a fused ring structure;
X is a neutral η⁴- bonded diene group having up to 30 non-hydrogen atoms, which forms a π-complex with M;
Y is -O-, -S-, -NR*-, -PR*-;
M is titanium or zirconium in the +2 formal oxidation state;
Z* is SiR₂, CR*₂, SiR*₂SiR*₂, CR*₂CR*₂, CR* = CR*, CR₂SiR*₂, or GeR*₂; wherein:
   R* in each occurrence is independently hydrogen, or a member selected from hydrocarbyl, silyl, halogenated alkyl, halogenated aryl, and combinations thereof, said R* having up to 10 non-hydrogen atoms, and optionally, two R* group from Z* (when R* is not hydrogen), or an R* group from Z* and an R* group from Y form a ring system.

We have found that by utilising the above-described resins, it is possible to obtain injection-moulded fuel tanks having excellent fire resistance and creep resistance, and also satisfactory impact properties.

### EXAMPLES

### EXAMPLES 1-20 - Preparation of polyethylene bimodal resin by flake blending

### A: Bench scale preparation of the Low Molecular Weight (LMW) Polyethylene Fraction

Under a stream of dry nitrogen gas 1.8 millimole of tri-isobutyl aluminium (TIBAL) and 1800 ml of isobutane were introduced into a dry autoclave reactor having a volume of 5 litres and provided with an agitator. The temperature was raised to 80°C, and after pressure stabilisation hydrogen gas was added. Ethylene gas was then introduced until a partial pressure of ethylene of 10 x 10⁵ Pa was achieved. The amount of hydrogen previously introduced into the autoclave reactor was selected so as to obtain the desired final gas phase molar ratio of hydrogen to ethylene (H₂/C₂ molar ratio).

The polymerisation was then started by flushing the solid catalyst A, ethylene bis (4,5,6,7-tetrahydro-1-indenyl) zirconium dichloride (prepared in accordance with the method of Brintzinger as published in the Journal of Organometallic Chemistry 288 (1995) pages 63 to 67), into the autoclave with 200 ml of isobutane. The temperature, partial pressure of ethylene, and the H₂/C₂ ratio were kept constant over the polymerisation period. The reaction was stopped by cooling and then venting the reactor. The low molecular weight polyethylene was then collected from the reactor.

The detailed polymerisation conditions are specified in Table 1.

### B: Bench scale preparation of the High Molecular Weight (HMW) Polyethylene Fraction

The process for preparing the high molecular weight fraction was the same as that for preparing the low molecular weight fraction specified above in Example A, except that instead of adding hydrogen after raising the temperature to 80°C, varying amounts of 1-hexene comonomer were added and a different amount of ethylene was introduced, in order to obtain the desired ethylene partial pressure and C₆⁼/C₂ ratio. The high molecular weight ethylene-hexene copolymer obtained was collected from the reactor.

The detailed polymerisation conditions are specified in Table 1.

### C: Preparation of the Polyethylene Resin Blend

In order to prepare the bimodal resin, the desired quantity of the low molecular weight polyethylene fraction obtained in Example A above was blended with the desired quantity of the high molecular weight ethylene-hexene copolymer obtained in Example B together with Irganox B225 antioxidant commercially available from CIBA Speciality Chemicals. The resulting blend was pelletised in an extruder (APV Baker under the trade name MP19TC25). The details of the blending recipes are specified in Table 2.

**TABLE 1 -**

| polymerisation conditions | | | |
|---|---|---|---|
| Ex. | LMW block | HMW block | |
| | H₂/C2 gas phase ratio | C2 partial pressure (bar) | 1-hexene content (g) |
| 1 | 3290 | 16 | 24 |
| 2 | 1960 | 18 | 20 |
| 3 | 1790 | 6 | 6 |
| 4 | 3290 | 18 | 50 |
| 5 | 1960 | 14 | 27 |
| 6 | 1570 | 14 | 20 |
| 7 | 1580 | 4 | 6 |
| 8 | 1830 | 10 | 18 |
| 9 | 1020 | 18 | 20 |
| 10 | 1790 | 6 | 10 |
| 11 | 1030 | 16 | 24 |
| 12 | 1030 | 4 | 6 |
| 13 | 1830 | 12 | 18.7 |
| 14 | 1690 | 12 | 26.8 |
| 15 | 1190 | 6 | 10 |
| 16 | 1330 | 18 | 50 |
| 17 | 1020 | 14 | 27 |
| 18 | 1190 | 12 | 18.7 |
| 19 | 1330 | 12 | 27 |

**TABLE 2 -**

| Proportions and properties of blocks of polymer for flake blending | | | | | | |
|---|---|---|---|---|---|---|
| Ex. | LMW block | | | HMW block | | |
| | wt% | MI₂ g/10 min | Density g/cm³ | wt% | HLMI g/10 min | Density g/cm³ |
| 1 | 55 | 207 | 971.5 | 45 | 0.02 | 921.3 |
| 2 | 54 | 57 | 968.6 | 46 | 0.03 | 922.0 |
| 3 | 44 | 35 | 966.8 | 56 | 0.22 | 929.8 |
| 4 | 54 | 207 | 971.5 | 46 | 0.03 | 916.5 |
| 5 | 53 | 57 | 968.6 | 47 | 0.04 | 919.7 |
| 6 | 55 | 16.9 | 965.2 | 45 | 0.04 | 921.5 |
| 7 | 38 | 25 | 966.0 | 62 | 0.61 | 931.5 |
| 8 | 50 | 41 | 967.8 | 50 | 0.08 | 922.5 |
| 9 | 60 | 4.7 | 960.4 | 40 | 0.03 | 922.0 |
| 10 | 43 | 35 | 966.8 | 57 | 0.28 | 927.1 |
| 11 | 64 | 2.2 | 958.6 | 36 | 0.02 | 921.3 |
| 12 | 46 | 2.2 | 958.6 | 54 | 0.61 | 931.5 |
| 13 | 48 | 41 | 967.8 | 52 | 0.12 | 922.4 |
| 14 | 50 | 44 | 968.1 | 50 | 0.08 | 920.2 |
| 15 | 50 | 2.8 | 960.0 | 50 | 0.28 | 927.1 |
| 16 | 58 | 8.5 | 963.0 | 42 | 0.03 | 916.5 |
| 17 | 58 | 4.7 | 960.4 | 42 | 0.04 | 919.7 |
| 18 | 55 | 2.8 | 960.0 | 45 | 0.12 | 922.4 |
| 19 | 54 | 8.5 | 963.0 | 46 | 0.07 | 919.8 |

**TABLE 3 -**

| Properties of bimodal polymer | | | | | | | | | |
|---|---|---|---|---|---|---|---|---|---|
| Ex. | MI₅ g/10 min | HLMI g/10 min | Densit y g/cm³ | µ0 dPa.s | µ2 dPa.s | Mn | Mw | Mz | MWD |
| 1 | 0.24 | 12.3 | 951.5 | 2390400 | 161000 | 19.6 | 236.4 | 914.8 | 12.1 |
| 2 | 0.17 | 7.6 | 950.5 | 3013300 | 191800 | 24.6 | 257.5 | 1012 | 10.5 |
| 3 | 0.16 | 4.8 | 948.4 | | | 29.6 | 228.0 | 758.2 | 8.2 |
| 4 | 0.30 | 12.9 | 947.1 | 2307100 | 155900 | 18.9 | 228.3 | 910.0 | 9.3 |
| 5 | 0.17 | 6.0 | 946.9 | 3210600 | 201100 | 25.6 | 247.9 | 901.3 | 8.9 |
| 6 | 0.18 | 5.4 | 947.2 | 3129000 | 211700 | 34.0 | 247.2 | 849.5 | 9.1 |
| 7 | 0.26 | 6.2 | 945.9 | | | 33.8 | 202.0 | 645.9 | 7.3 |
| 8 | 0.16 | 4.8 | 946.5 | 3434800 | 215000 | 27.3 | 240.3 | 804.9 | 8.6 |
| 9 | 0.16 | 4.4 | 947.7 | 3155300 | 228600 | 38.5 | 252.6 | 879.6 | 7.4 |
| 10 | 0.19 | 5.4 | 945.5 | | | 30.3 | 216.9 | 671.7 | 7.2 |
| 11 | 0.23 | 4.9 | 946.8 | 2641700 | 221000 | 43.0 | 235.1 | 834.3 | 5.5 |
| 12 | 0.27 | 5.5 | 945.1 | | | 42.7 | 192.4 | 562.2 | 4.5 |
| 13 | 0.13 | 4.1 | 945.2 | | | 28.4 | 254.0 | 857.6 | 8.93 |
| 14 | 0.16 | 5.4 | 944.9 | 3192400 | 211300 | 28.3 | 245.6 | 836.2 | 8.68 |
| 15 | | 5.2 | 944.5 | | | 46.5 | 199.3 | 568.8 | 4.29 |
| 16 | 0.24 | 6.0 | 943.6 | 2644000 | 200500 | 38.6 | 234.9 | 819.6 | 6.09 |
| 17 | 0.20 | 5.0 | 945.2 | 3011900 | 219800 | 41.2 | 237.5 | 793.9 | 5.76 |
| 18 | 0.18 | 4.0 | 944.3 | 3571300 | 241700 | 46.6 | 232.0 | 715.3 | 4.98 |
| 19 | 0.20 | 5.0 | 943.8 | 2995700 | 218700 | 39.1 | 228.9 | 727.8 | 5.86 |
| Notes: µ0 = Viscosity at shear rate of 1s⁻¹ with a 0.3/1 ratio die. µ2 = Viscosity at shear rate of 100 s⁻¹ with a 0.3/1 ratio die. | | | | | | | | | |

### Physical properties for fuel tank use

For the various physical property evaluations, compressed plates of varying thicknesses were formed as follows. Polymer flake was loaded into a picture-frame mould and brought in contact with the plates of a hot press, which were rapidly heated up to 190°C at a pressure of 20 bar. The sample was held at those conditions for approximately 5 minutes. The pressure was increased to 80 bar in order to force the polymer to flow out through the shape of the frame. After 5 minutes, pressure was released and the temperature was decreased at a rate of 15°C/min down to 35°C. The plates thus obtained were stored at room temperature for at least 7 days before being submitted to any mechanical tests.

Impact properties were assessed by notched Charpy tests performed at - 40°C. on specimens taken from 4mm thick compressed plates according to ISO179/1EA.

Creep resistance was assessed by tensile strength measurements performed at 80°C under 2.5 Mpa on ISOB1A specimens machined from 2 mm thick compressed plates.

Environmental stress crack resistance (ESCR) was determined by FNCT performed at 50°C under 7 Mpa stress on 6 x 6 mm specimens taken from compressed plates.

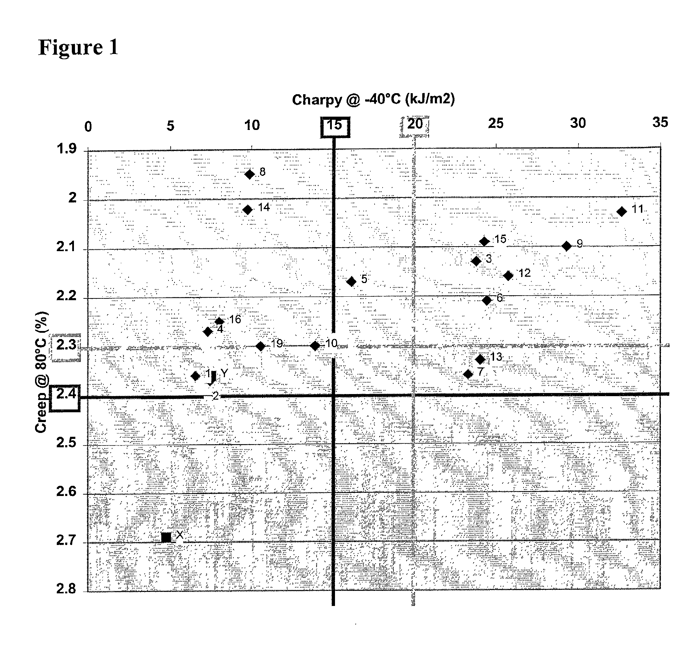

The results of the above tests are shown in Table 4, and a plot of Charpy vs Creep is given in Figure 1, showing the boundaries of the properties defined in the second aspect of the invention. For commercial purposes, an acceptable value of Charpy impact is greater than 5 kJ/m². An acceptable value of Creep is less than 2.4%, and an acceptable ESCR as determined by FNCT is greater than 35 hours.

As shown in Figure 4, it can be seen that all the resins of the invention satisfy these basic requirements. However, a significant number of the above Examples have a Charpy impact of greater than 15 kJ/m², as defined in the second aspect of the invention, which makes them significantly superior to commercial resins used in fuel tank applications such as X and Y in Figure 4. Several resins have Charpy values greater than 20 kJ/m² and Creep values less than 2.3%, as is preferred in the second aspect of the invention.

**TABLE 4 -**

| Properties of bimodal polymer for fuel tank application | | | |
|---|---|---|---|
| Example | Charpy kJ/m² | Creep % | FNCT hours |
| 1 | 6.54 | 2.36 | >120 |
| 2 | 7.43 | 2.37 | >120 |
| 3 | 23.8 | 2.13 | >120 |
| 4 | 7.29 | 2.27 | >120 |
| 5 | 16.08 | 2.17 | >163 |
| 6 | 24.45 | 2.21 | >163 |
| 7 | 23.3 | 2.36 | - |
| 8 | 9.86 | 1.95 | >163 |
| 9 | 29.33 | 2.10 | >163 |
| 10 | 13.86 | 2.30 | - |
| 11 | 32.66 | 2.03 | >163 |
| 12 | 25.77 | 2.16 | 63 |
| 13 | 24.04 | 2.33 | >160 |
| 14 | 9.75 | 2.02 | >160 |
| 15 | 24.29 | 2.09 | >160 |
| 16 | 8.0 | 2.25 | >190 |
| 17 | 26.63 | - | >190 |
| 18 | 30.25 | - | >190 |
| 19 | 10.54 | 2.30 | >190 |

## Claims

1. Fuel tank for a vehicle comprising at least one component which is blow-moulded multimodal polyethylene having a polydispersity M_{w}/Mₙ of at least 4, formed of at least two blocks, each having a polydispersity M_{w}/Mₙ of less than 4.

2. Fuel tank for a vehicle comprising at least one component which is blow-moulded multimodal polyethylene, wherein the polyethylene has a creep deformation at 80°C of no more than 2.4%, and a Charpy impact at - 40°C of at least 15 kJ/m².

3. Fuel tank according to claim 2, wherein the polyethylene resin has a creep resistance at 80°C of no more than 2.3%.

4. Fuel tank according to claim 2 or 3, wherein the polyethylene resin has a Charpy impact at - 40°C of at least 20 kJ/m².

5. Fuel tank according to any preceding claim, wherein the polyethylene resin is bimodal.

6. Fuel tank according to any preceding claim, wherein the polydispersity of the polyethylene resin is at least 5.

7. Fuel tank according to any preceding claim, wherein the unformulated polyethylene resin, before the incorporation of any additives, has a density of from 930 to 965 kg/m³.

8. Fuel tank according to any preceding claim, wherein the high load melt index (HLMI) of the polyethylene resin is between 2 and 7 g/10 min.

9. Fuel tank according to any preceding claim, wherein µ₀ of the polyethylene resin, the viscosity at a shear rate of 1 s⁻¹ with a conical die having a ratio of length to internal diameter of 0.3:1, is at least 2.5 x 10⁶ dPa.s.

10. Fuel tank according to any preceding claim, wherein the polyethylene resin is bimodal and comprises 20-80% of a high molecular weight block, and 70-30% of a low molecular weight block.

11. Fuel tank according to claim 10, wherein the low molecular weight block is a homopolymer of ethylene.

12. Fuel tank according to claim 10 or 11, wherein the high molecular weight block is a copolymer of ethylene and one or more of butene, pentene, hexene and octene.

13. Fuel tank according to any one of claims 10 to 12, wherein the Melt Index (MI₂) of the low molecular weight block is less than 500.

14. Fuel tank according to any one of claims 10 to 13, wherein the HLMI of the high molecular weight block is between 0.001 and 2.

15. Fuel tank according to any preceding claim, wherein the polyethylene resin is made using a metallocene catalyst, and the polydispersity thereof is between 5 and 9.

16. Fuel tank according to any preceding claim, wherein the polyethylene resin is made using a Ziegler-Natta catalyst, and the polydispersity thereof is between 10 and 18.
